# EUROPEAN PATENT APPLICATION

(11) **EP 0 649 990 A1**
(43) Date of publication of application: **26.04.1995**
(21) Application number: 94304123.6
(22) Date of filing: 08.06.1994
(51) Int. Cl.: F16C 23/08, F16C 33/36

(54) **Full complement self-aligning roller bearing**

(30) Priority: 26.10.1993 US 142188
(71) Applicant: REXNORD CORPORATION, Milwaukee, WI 53214 (US)
(72) Inventor: Grunze, Mark R., Naperville, Illinois 60565 (US)
(74) Representative: Allman, Peter John

(57) **Abstract**

A retainerless self-aligning angular contact antifriction bearing apparatus including an inner race member (18) having a spheroidal inner race surface, an outer race member (22) including a pair of convex outer race surfaces opposing the inner race surface (18), and a plurality of rollers (34) arranged in axially oppositely inclined rows. Each roller (34) includes a concave longitudinal profile having a radius of curvature (Rᵣ) greater than the radius of curvature of each of the spheroidal inner race surface (20) and the associated convex outer race surface (24).

## Description

### BACKGROUND OF THE INVENTION

### Field of the Invention

The invention relates generally to anti-friction bearings, and more particularly to bearings for rotating or oscillating shafts.

### Reference to Prior Art

Self-aligning angular contact roller bearings are shown in U.S. Patent No. 2,387,962 issued October 30, 1945 and U.S. Patent No. 2,767,037 issued October 16, 1956. In each of those patents the illustrated roller bearing includes an inner race member that provides a substantially spherical inner race surface, a pair of outer race surfaces having convex curvatures, and a pair of oppositely inclined rows of hourglass-shaped rollers. Those bearings also include bearing cages or retainers to provide proper guidance and separation of the rollers in each row. An example of the above-described bearing unit is produced by Rexnord Bearing Division of Downers Grove, Illinois and has a Model No. DP138H.

The load exerted on a bearing unit such as is described above is typically carried by the rollers in only one part of the unit at a time, that part being referred to as the "load zone". Especially where bearings are used in oscillatory applications, such as an aircraft structure support applications, it is desired that the rollers precess or index so that they are cycled through the load zone. Cycling the rollers redistributes lubrication, provides for uniform wear of the rollers, and decrease fretting in the rollers and the race surfaces resulting from metal to metal contact between the rollers and the race surfaces. To cause such processing or indexing of the rollers, it is known to use a retainer including a central ring having axially projecting fingers that separate adjacent rollers in each row. A known retainer has fingers inclined at about four degrees to provide a desired amount of skew to the rollers, the skew of the rollers providing processing or indexing of the rollers during oscillation of the bearing.

A disadvantage associated with the foregoing roller bearing units is the inclusion of a retainer, guide ring or the like. Such components are costly to produce and assemble as part of the bearing unit, and a retainer occupies space within the bearing unit that could otherwise be used for additional rollers or additional lubricant.

### SUMMARY OF THE INVENTION

The invention provides an improved anti-friction roller bearing apparatus suitable for slow rotation or oscillatory service. The bearing apparatus does away with the roller retainer or guide ring present in prior art arrangements without significantly adversely affecting the indexing or processing characteristics of the bearing. The retainerless bearing apparatus is capable of receiving an increased number of rollers so that the load is distributed among more rollers occupying the load zone. Accordingly, a bearing embodying the invention can have a higher load bearing capacity than a bearing of similar size including a bearing cage or guide ring. The absence of a roller retainer also leaves space for additional lubricant.

In particular, Applicant has discovered that, surprisingly, adequate skew control and roller indexing are achieved in bearing units, such as the aforementioned Model DP138H unit for example, when the retainer or center guide ring is removed. More specifically, roller skew control is achieved at the interface of the race surface(s) and the rollers via contact of the rollers, which have arcuate outer surfaces, with the corresponding arcuate race surface(s). This contact, under no load conditions, is substantially point contact at about the midpoint of the roller. Under loaded conditions, contact extends axially outwardly of the roller midpoint to limit skewing, but preferably does not extend to the ends of the rollers so that sliding contact at the ends of the rollers is minimized.

In particular, the invention provides a retainerless antifriction bearing apparatus including an inner race member including an arcuate inner race surface, an outer race member including an arcuate outer race surface opposing the arcuate inner race surface, and a row of rollers in the raceway space defined between the inner and outer race surfaces. Since the bearing apparatus is retainerless each roller is engageable with the rollers on its opposite sides, and the inner and outer race surfaces function as the sole means for limiting roller skew and for positioning and holding the rollers within the raceway space. To achieve this, each roller is provided with an arcuate outer surface having a radius of curvature that is different from the radius of curvature of each of the inner and outer race surfaces.

In one embodiment, the retainerless antifriction bearing apparatus includes an inner race member having a spheroidal inner race surface, and an outer race member having a convex outer race surface opposing the inner race surface. The bearing apparatus also includes a plurality of rollers arranged in a row in the raceway space between the inner and outer race surfaces. Each of the rollers includes a concave longitudinal profile having a radius of curvature greater than the radius of curvature of each of the convex outer race surface and the spheroidal inner race surface. Applicant has discovered that this geometric relationship between the rollers and the race surfaces provides sufficient roller skew for the bearing to precess or index during oscillating operation of the bearing without resorting to asymmetrically-shaped rollers or retainers, guide rings and the like heretofore used for controlling roller skew.

Various other features and advantages of the invention will become apparent to those skilled in the art upon review of the following detailed description, claims and drawings.

### BRIEF DESCRIPTION OF THE DRAWINGS

Fig. 1 is a side elevational view, partially broken away and in section, of a roller bearing apparatus shown supporting a shaft.

Fig. 2 is an enlarged view of a portion of the bearing apparatus illustrated in Fig. 1, and showing the roller depicted therein under loaded conditions.

Fig. 3 is a further enlarged view of part of the bearing apparatus portion illustrated in Fig. 2, and showing the roller in a no load condition wherein the line of contact between the roller and the race surfaces is substantially reduced.

Before one embodiment of the invention is explained in detail, it is to be understood that the invention is not limited in its application to the details of construction and the arrangement of components set forth in the following description or illustrated in the drawings. The invention is capable of other embodiments and of being practiced or being carried out in various ways. Also, it is to be understood that the phraseology and terminology used herein is for the purpose of description and should not be regarded as limiting.

### GENERAL DESCRIPTION

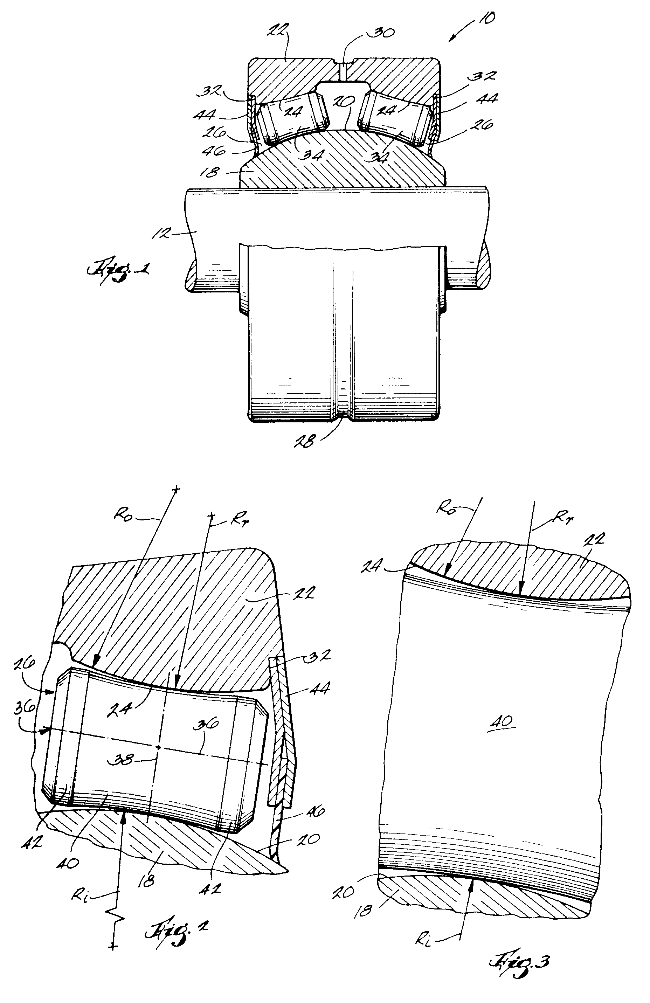

Illustrated in Fig. 1 is an anti-friction roller bearing apparatus 10 which embodies the invention and which is shown supporting a rotating or oscillating shaft 12. In the particular embodiment illustrated in the drawings, the bearing apparatus 10 is an angular contact internally self-aligning bearing.

The bearing apparatus 10 comprises an inner race assembly 14 including a tubular sleeve 16 through which the shaft 12 extends, and an annular inner race member 18 mounted on the sleeve 16, such as by press fitting, for example. The inner race member 18 includes an arcuate outer surface forming an inner bearing race surface 20. The inner race surface 20 is preferably substantially spheroidal and has (Fig. 2) a radius of curvature Rᵢ. If desired, collars (not shown) can be secured on the opposite ends of the sleeve 16 to insure proper positioning of the inner race member 18 or to provide misalignment stops. A bearing apparatus including suitable collars is illustrated in aforementioned Patent No. 2,767,037, the specification of which is herein incorporated by reference.

The roller bearing 10 also comprises an annular outer race member 22 encircling the inner race member 18. The outer race member 22 includes at least one radially inwardly facing outer race surface. In the illustrated arrangement, the outer race member 22 includes a pair of axially oppositely inclined arcuate outer race surfaces 24 each opposing the inner race surface 20 to provide a pair of raceway spaces 26. The outer race surfaces 24 are of generally convex curvature and each has (Fig. 2) a radius of curvature Rₒ that is preferably substantially constant. The value of radius of curvature Rₒ for both outer race surfaces 24 is preferably the same (within manufacturing tolerances) and, in the illustrated embodiment, is less than radius of curvature Rᵢ.

To facilitate periodic lubrication of the bearing apparatus 10, an annular groove 28 is provided on the outer circumferential side of the outer race member 22 and a hole 30 communicates between the groove 28 and the interior of the bearing apparatus 10. A desired lubricant can be injected into the groove 28 by suitable means such as a grease gun (not shown), such as is described in Patent No. 2,767,037. For reasons explained hereinafter, the outer race member 22 also includes notches 32 on its opposite axial sides.

The roller bearing 10 also comprises a plurality of rollers 34. In the illustrated embodiment, the rollers 34 are arranged in the raceway spaces 26 in oppositely axially inclined annular rows. Each row includes up to a full complement (i.e., maximum number of rollers that will fit in a row when no retainer or other structure intervenes between adjacent rollers) of rollers 34. Since the bearing apparatus 10 is retainerless, as is further discussed below, each roller 34 is engageable with the adjacent rollers on its opposite sides, as well as with the inner race surface 20 and the associated one of the outer race surfaces 24. While the rollers 34 can have various configurations, in the illustrated arrangement the rollers 34 are identical (within manufacturing tolerances), and each roller 34 has (Fig. 2) a longitudinal axis 36 and is symmetric about a plane perpendicular to the axis 36 and including a line 38 at the midpoint of the roller 34.

As shown in Fig. 2, each roller 34 includes a midsection 40 with an arcuate outer surface having a concave longitudinal profile with a radius of curvature Rᵣ that is preferably constant. In the particular embodiment illustrated in the drawings, radius of curvature Rᵣ is greater than each of the radii of curvatures Rᵢ and Rₒ. Each roller 34 also has opposite end portions 42 that are substantially cylindrical.

Since the bearing apparatus 10 includes no retainer, the inner race surface 20 and the outer race surfaces 24 serve as the sole means for holding and positioning the rollers 34 of each row within the corresponding raceway space 26 of the unit. Additionally, since the inner race surface 20 is spheroidal and Rᵢ is less than Rᵣ, sliding movement between the rollers 34 and the inner race surface 20 is substantially eliminated and pivotal movement of each roller 34 about its midpoint line 38 is at most minimally interfered with by the inner race surface 20. Therefore, such pivotal movement (i.e. skewing) is controlled substantially entirely by contact between the rollers 34 and the associated outer race surfaces 24. Applicant has discovered that, unexpectedly, in the illustrated embodiment the cooperation of the rollers 34 with the outer race surfaces 24 is adequate to provide the sole means for controlling roller skew.

In particular, under no load conditions (Fig. 3), substantially point contact exists between each of the rollers 34 and the associated outer race surface 24 such that pivotal movement of each roller 34 about its midpoint line 38 (skewing) is limited only by the outer race surface 24. Under loaded conditions (Fig. 2), contact between the roller 34 and each of the associated outer race surface 24 and the inner race surface 20 is extended axially outwardly from the mid-point of the roller 34 due to material deflection. Although the effects of that relationship are not fully understood, it has been observed that adequate indexing or processing of the rollers 34 is achieved when the bearing apparatus 10 is used in oscillatory applications. Additionally, tests have indicated substantial increases in load rating and bearing life as measured by cycles to failure relative to prior art bearings including retainers, this being presumably due to the increased number of rollers 34 over which the load is distributed. It has also been observed that that relationship encourages rolling movement of the rollers 34 by reducing roller edge contact with the inner and outer race surfaces 20 and 24.

In one particular embodiment of the invention, for example, fifteen of a possible sixteen (i.e., full complement) rollers each having a diameter (in end view) of about 0.4 inch are used in each row, the space left by the absent sixteenth roller being used for additional lubricant. In that embodiment, Rᵣ is about 1.536 inches and about one-hundredth of an inch greater than each of Rᵢ and Rₒ, and Rₒ is at least several one-thousandths of an inch greater than Rᵢ.

While in the illustrated embodiment the rollers 34 are hourglass-shaped, the outer race surfaces 24 are convex and the inner race surface 20 is spheroidal, in other arrangements the bearing apparatus 10 can have different configurations. For example, a bearing apparatus in accordance with the invention could include barrel-shaped rollers and the inner and outer race surfaces could each be concave to accommodate the barrel-shaped rollers and to hold those rollers in position without the use of a retainer, guide ring, or the like.

The bearing apparatus 10 also includes means for preventing contaminants from entering the raceway spaces 26. While various means for preventing contaminants from entering the raceway spaces 26 can be employed, in the illustrated arrangement such means includes annular shield members 44 each seated in one of the notches 32, and an annular seal member 46 mounted in each of the shield members 44.

Advantageously, the bearing apparatus 10 includes nothing to guide or position the rollers 34 and to control roller skewing within acceptable levels other than the inner and outer race surfaces 20 and 24 (i.e., the bearing apparatus 10 is "retainerless"). Thus, the bearing apparatus 10 avoids the cost and assembly problems associated with retainers, guide rings and the like. The bearing apparatus 10 also includes an increased number of rollers 34 and/or additional lubrication to improve performance without substantially adversely affecting the ability of the unit to automatically index or precess.

Other features and advantages of the invention are set forth in the following claims.

## Claims

1. An antifriction bearing apparatus comprising
an inner race member including an arcuate inner race surface,
an outer race member encircling the inner race member and including an arcuate outer race surface opposing the arcuate inner race surface, the arcuate inner and outer race surfaces defining therebetween a raceway space,
a plurality of rollers including a row of rollers in the raceway space, each of the rollers in the row being engageable with adjacent ones of the rollers, and
retainerless means for limiting skew of the rollers in the row and for positioning and holding the rollers within the raceway space, said retainerless means including only the arcuate inner and outer race surfaces.

2. An antifriction bearing apparatus as set forth in claim 1 wherein the arcuate inner race surface includes a radius of curvature, wherein the arcuate outer race surface includes a radius of curvature, wherein each of the rollers includes a midpoint and is symmetrical about its midpoint, and wherein each of the rollers includes an arcuate outer surface having a radius of curvature different from the radius of curvature of each of the arcuate inner and outer race surfaces so that, under no load conditions, substantially point contact exists between the midpoint of the one roller and both the arcuate inner race surface and the convex outer race surface, and so that increasing loads extend the length of contact between the one roller and each of the arcuate inner race surface and the convex outer race surface axially outwardly from the midpoint of the one roller.

3. An antifriction bearing apparatus as set forth in claim 2 wherein the arcuate outer race surface is convex, and each of the rollers includes a concave longitudinal profile, and wherein the radius of curvature of each of the rollers is greater than the radius of curvature of each of the arcuate inner and outer race surfaces.

4. An antifriction bearing apparatus as set forth in claim 3 wherein the arcuate inner race surface forms a portion of a sphere, wherein the radius of curvature of the arcuate outer race surface is constant, and wherein the radius of curvature of each of the rollers is constant.

5. An antifriction bearing apparatus as set forth in claim 4 wherein the row of rollers includes a full complement of rollers.

6. An antifriction bearing apparatus as set forth in claim 1 wherein the inner race member includes a second arcuate outer race surface, the second arcuate outer race surface opposing the arcuate inner race surface to define therebetween a second raceway space, the arcuate outer race surfaces being oppositely axially inclined, wherein the plurality of rollers includes a second row of rollers in the second raceway space, and wherein the antifriction bearing apparatus includes retainerless second means for limiting skew of the rollers in the second row and for positioning and holding the rollers in the second row within the second raceway space, said retainerless second means including only the arcuate inner race surface and the second arcuate outer race surface.

7. An antifriction bearing apparatus as set forth in claim 6 wherein the arcuate inner race surface includes a radius of curvature, wherein each of the arcuate outer race surfaces includes a radius of curvature, wherein each of the rollers includes a midpoint and is symmetrical about its midpoint, each of the rollers engaging an associated one of the arcuate outer race surfaces, and wherein each of the rollers includes an arcuate outer surface having a radius of curvature different from the radius of curvature of each of the arcuate inner race surface and the associated one of the arcuate outer race surfaces.

8. An antifriction bearing apparatus as set forth in claim 7 wherein each of the arcuate outer race surfaces is convex, and each of the rollers includes a concave longitudinal profile, and wherein the radius of curvature of each of the rollers is greater than the radius of curvatures of each of the arcuate inner race surface and the associated one of the arcuate outer race surfaces.

9. A retainerless self-aligning antifriction bearing apparatus comprising
an inner race member including an arcuate inner race surface,
an outer race member encircling the inner race member and including a convex outer race surface opposing the inner race surface, the convex outer race surface including a radius of curvature, and the arcuate inner race surface and the convex outer race surface defining therebetween a raceway space,
a plurality of rollers including a row of rollers in the raceway space, each of the rollers in the raceway space being engageable with adjacent ones of the rollers on its opposite sides, and each of the rollers in the raceway space including a concave longitudinal profile having a radius of curvature greater than the radius of curvature of the convex outer race surface, and
retainerless means for positioning the rollers within the bearing apparatus, said means for positioning the rollers including only the arcuate inner race surface and the convex outer race surface.

10. An antifriction bearing apparatus as set forth in claim 9 wherein the arcuate inner race surface includes a radius of curvature less than the radius of curvature of each of the rollers.

11. An antifriction bearing apparatus as set forth in claim 10 wherein the radius of curvature of the arcuate inner race surface is constant so that the arcuate inner race surface forms part of a sphere, wherein the radius of curvature of the convex outer race surface is constant, and wherein each of the rollers is symmetrical, and the radius of curvature of each of the rollers is constant.

12. An antifriction bearing apparatus as set forth in claim 9 wherein the bearing apparatus includes means for limiting roller skew, said means for limiting roller skew including only the convex outer race surface.

13. An antifriction bearing apparatus as set forth in claim 9 wherein each roller includes a midsection, and opposite end portions, and wherein each of the opposite end portions of said roller is engageable with one of the adjacent ones of the rollers.

14. An antifriction bearing apparatus as set forth in claim 9 wherein the outer race member includes a second convex outer race surface which opposes the arcuate inner race surface to define therebetween a second raceway space, and which includes a radius of curvature, the convex outer race surfaces being oppositely axially inclined, wherein the plurality of rollers includes a second row of rollers in the second raceway space, each of the rollers in the second row of rollers being engageable with the adjacent ones of the rollers in that row, and each of the rollers in the second row of rollers including a concave longitudinal profile having a radius of curvature greater than each of the radius of curvature of the arcuate inner race surface and the radius of curvature of the second convex outer race surface, wherein the radius of curvature of each of the rollers is constant, wherein each of the rollers includes a midpoint and is symmetrical about its midpoint, wherein each of the rollers engages an associated one of the convex outer race surfaces, wherein the rows of rollers are oppositely axially inclined, and each of the rows of rollers includes a full complement of rollers, wherein, under no load conditions, substantially point contact exists between each of the rollers and the arcuate inner race surface and the associated one of the convex outer race surfaces, and wherein increasing loads extend the length of contact between each of the rollers and the arcuate inner race surface and the associated one of the convex outer race surfaces.

15. A retainerless self-aligning antifriction bearing apparatus comprising
an inner race member including an arcuate inner race surface, the arcuate inner race surface forming a portion of a sphere having a radius of curvature,
an outer race member encircling the inner race member, the outer race member including a pair of oppositely axially inclined convex outer race surfaces opposing the inner race surface to form a pair of raceway spaces, each of the convex outer race surfaces including a constant radius of curvature, and
a plurality of rollers arranged in oppositely axially inclined rows, each of the rows occupying one of the raceway spaces, each of the rollers engaging the arcuate inner race surface and an associated one of the convex outer race surfaces, each of the rollers being engageable with adjacent ones of the rollers in the same row, each of the rollers including a midpoint and being symmetrical about its midpoint, and each one of the rollers including a concave longitudinal profile having a constant radius of curvature greater than each of the radius of curvature of the arcuate inner race surface and the radius of curvature of the associated one of the convex outer race surfaces so that, under no load conditions, substantially point contact exists between the midpoint of the one roller and both the arcuate inner race surface and the associated one of the convex outer race surfaces, and so that increasing loads extend the length of contact between the one roller and each of the arcuate inner race surface and the associated one of the convex outer race surfaces axially outwardly from the midpoint of the one roller, and
means for positioning and holding each of the rollers within the bearing apparatus, said means for positioning and holding including only the arcuate inner race surface and the associated one of the convex outer race surfaces.

16. An antifriction bearing apparatus as set forth in claim 15 wherein the bearing apparatus includes means for limiting roller skew, said means for limiting roller skew including only the convex outer race surfaces.
